Europäisches Patentamt

European Patent Office

Office européen des brevets

(11) Veröffentlichungsnummer: **0 037 002**

A1

## (12) EUROPÄISCHE PATENTANMELDUNG

(21) Anmeldenummer: **81101972.8**

(22) Anmeldetag: **17.03.81**

(51) Int. Cl.³: **F 16 C 35/06**
**F 03 D 11/00**

(30) Priorität: **28.03.80 DE 3012069**

(43) Veröffentlichungstag der Anmeldung:
**07.10.81 Patentblatt 81/40**

(84) Benannte Vertragsstaaten:
**GB NL SE**

(71) Anmelder: **Messerschmitt-Bölkow-Blohm Gesellschaft
mit beschränkter Haftung München
Robert-Koch-Strasse
D-8012 Ottobrunn(DE)**

(72) Erfinder: **Kulinyak, Ernst, Ing. grad.
Krankenhausweg 10
D-8206 Bruckmühl(DE)**

(54) **Lagerung für den Rotor einer Windenergieanlage.**

(57) Eine den Rotor (1) einer Windenergieanlage tragende Abstützung (3), die an einer Gondel (10) über Wälzlager (5,6) gelagert ist und über die die Rotordrehbewegung in ein Getriebe (11) eingeleitet wird, das mit einem Generator kuppelbar ist, endet gondelseitig in einer Hülse (4), in der die Außenringe (51,61) der axial im Abstand angeordneten Wälzlager (5,6) drehfest aufgenommen sind, deren Innenringe (52,62) auf einem an der Gondel (10) angeflanschten, in die Hülse (4) ragenden Getriebegehäuse (7) in der Nähe seiner Stirnseiten drehfest gehalten sind.

./...

EP 0 037 002 A1

Beschreibung

Die Erfindung betrifft eine Lagerung für den Rotor einer
Windenergieanlage mit einer den Rotor tragenden Abstützung, die an einer Gondel über Wälzlager gelagert
ist und über die die Rotordrehbewegung in ein Getriebe
eingeleitet wird, das mit einem Generator kuppelbar ist.

Es ist bereits bekannt, an einem Turm Gondeln anzubringen, die mit einem Getriebe und einem damit kuppelbaren Generator versehen sind. In das Getriebe wird eine
Rotorwelle eingeführt, die in einer an der Gondelstirnseite befestigten Stützkonstruktion durch im Abstand angeordnete Wälzlager gelagert ist. Die Rotorwelle trägt
an ihrem freien Ende im Schlaggelenk den Rotor. Diese
Art der Wellenlagerung erfordert eine große Baulänge,
ist torsionsweich und sehr aufwendig.

Bekannt ist außerdem eine fliegende Rotorlagerung an
einer Gondel. Die Gondel hat dabei an der rotorseitigen
Stirnseite einen Ringflanschfortsatz, während die den
Rotor tragende Abstützung einen Außenring trägt. Zwischen dem Ringflansch und dem Außenring ist ein Wälzlager angeordnet. Eine an der Abstützung sitzende Welle
führt die Drehung in das in der Gondel angeordnete Getriebe ein.

Eine solche fliegende Lagerung muß sehr hohe Lagerlasten
aufnehmen, so daß sie für etwas größere Windenergieanlagen nicht geeignet ist.

Die der Erfindung zugrundeliegende Aufgabe besteht nun
darin, die Lagerung der eingangs genannten Art so auszubilden, daß sich unter Ausnutzung der Vorteile der fliegenden Lagerung und der konventionellen Lagerung eine
kompakte kurze Bauweise der Lagerung erreichen läßt.

Diese Aufgabe wird ausgehend von der Lagerung der eingangs genannten Art dadurch gelöst, daß die Abstützung
gondelseitig in einer Hülse endet, in der die Außenringe
der axial im Abstand angeordneten Wälzlager drehfest
aufgenommen sind, deren Innenringe auf einem an der
Gondel angeflanschten in die Hülse ragenden Getriebegehäuse in der Nähe seiner Stirnseiten drehfest gehalten sind.

Die erfindungsgemäße Lagerung hat den Vorteil, daß die
Lagerung kurz und kompakt ausgeführt werden kann, wobei
die Drehmomentenübertragung torsionssteif und der Anschluß des Rotors an die Gondels biegesteif erfolgen können. Die Lagerkräfte sind unter Verwendung konventioneller Wälzlager und aufgrund eines großen Lagerabstands
zwischen den beiden Auflagerpunkten leicht beherrschbar.
Der Aufbau der Anordnung ist einfach, da ein Bauteil
mehrere Funktionen erfüllt. Da als Welle die erste Getriebestufe herangezogen wird, entfällt eine weitere
Stützstruktur. Der Abstand Rotorschlaggelenk zur Drehachse läßt sich sehr kurz halten. Zusätzliche Massen in
Form einer Stützstruktur oder in Form einer Rotorwelle
entfallen.

Zum Stand der Technik gehört zwar die Lagerung einer
Rotorwelle, insbesondere für Drehflügelflugzeuge (DE-
OS 24 32 879), bei der in einem Stützring ein Wälzlagerpaar mit winklig gegeneinander angestellten Laufbahnen mit geringem Abstand zusammengefaßt und geführt
ist, wobei der Stützring mit einem Gestell verbunden
ist und über Stützstreben direkt an einem Grundrahmen abgestützt wird. Bei dieser bekannten Lagerung ist jedoch
der axiale Abstand der Wälzlager relativ klein. Außerdem ist der Grundaufbau der Lagerung anders als die erfindungsgemäße Lagerung geartet.

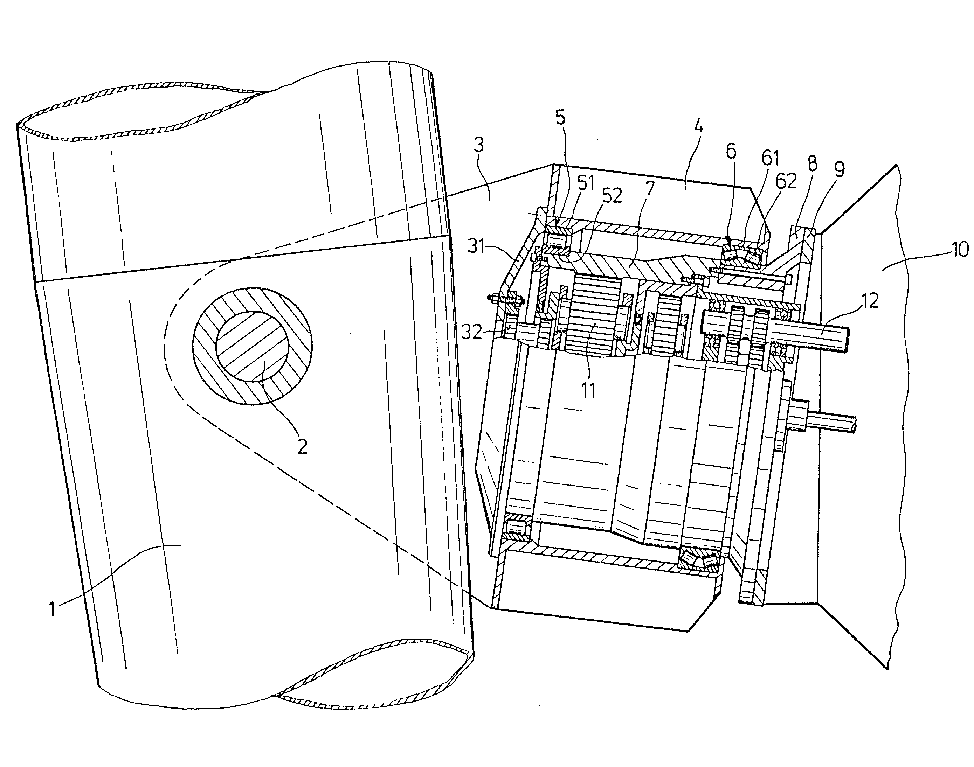

Anhand der Zeichnung, die schematisch teilweise geschnitten eine Ausführungsform einer erfindungsgemäßen Lagerung
darstellt, wird die Erfindung näher erläutert.

An einer Gondel 10 einer Windenergieanlage, die einen
nicht gezeigten Generator trägt, ist über einen Flansch
9 der abtriebseitige Flansch 8 eines Getriebegehäuses
7 befestigt. In dem Gehäuse 7 ist ein mehrstufiges Getriebe 11 angeordnet, dessen Abtriebswelle 12 mit dem
in der Gondel 10 angeordneten nicht gezeigten Generator
kuppelbar ist.

Das Getriebegehäuse 7 ragt in eine Hülse 4. Die Hülse 4
ist über ein gondelseitiges Wälzlager 6 und über ein
rotorseitiges Wälzlager 5 drehbar auf dem Getriebegehäuse 7 gelagert, wobei die Innenringe 52 und 62 drehfest auf dem Getriebegehäuse 7 sitzen, während die
Außenringe 51 und 61 der Wälzlager 5 und 6 drehfest in
der Hülse 4 gehalten sind. Die Wälzlager 5 und 6 sind in
einem axialen Abstand angeordnet. Dieser axiale Abstand
wird möglichst groß gewählt und ist durch die Länge des
Getriebegehäuses 7 bestimmt, da die Wälzlager 5 und 6 in
der Nähe der Stirnseiten des Getriebegehäuses 7 angeordnet werden.

An der Hülse 4 sitzt eine Abstützung 3, die in einem
Schlaggelenk 2 den Rotor 1 trägt. Das Drehmoment wird
über an der Abstützung 3 befestigte Arme 31 und Verzahnungselemente 32 in das Getriebe 11 in bekannter Weise eingeleitet. Die Hülse 4 rotiert somit um das stillstehende Getriebe 11, wobei das Getriebegehäuse 7 ein Hohlrad der ersten Getriebestufe bildet, wodurch sich die Funktion einer torsionssteifen Welle ergibt. Außerdem nimmt das Getriebegehäuse 7 die über die Wälzlager einwirkenden Lagerlasten auf. Die Biegebelastung aus dem freitragenden Rotor wird über die Flansche 8 und 9 in die Gondel 10 geleitet, wodurch sich eine sehr gute Biegesteifigkeit der Anordnung ergibt.

MESSERSCHMITT-BÖLKOW-BLOHM
GESELLSCHAFT
MIT BESCHRÄNKTER HAFTUNG,
MÜNCHEN

Ottobrunn, 25.03.80
BT01 Dr.Fi/Bi/ma

8717

## Lagerung für den Rotor einer Windenergieanlage

P a t e n t a n s p r u c h

Lagerung für den Rotor einer Windenergieanlage mit
einer den Rotor tragenden Abstützung, die an einer Gondel über Wälzlager gelagert ist und über die die Rotordrehbeweung in ein Getriebe eingeleitet wird, das
mit einem Generator kuppelbar ist, dadurch g e k e n n -
z e i c h n e t , daß die Abstützung (3) gondelseitig
in einer Hülse (4) endet, in der die Außenringe (51,
61) der axial im Abstand angeordneten Wälzlager (5, 6)
drehfest aufgenommen sind, deren Innenringe (52, 62) auf
einem an der Gondel (10) angeflanschten, in die Hülse
(4) ragenden Getriebegehäuse (7) in der Nähe seiner
Stirnseiten drehfest gehalten sind.

1/1

0037002

**EUROPÄISCHER RECHERCHENBERICHT**

Europäisches Patentamt

Nummer der Anmeldung

EP 81 10 1972.8

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| | FR - A - 1 009 166 (BUREAU D'ETUDES SCIENTIFIQUES ET TECHNIQUES) <br> * Fig. 1 * <br> -- | | 1 | F 16 C 35/06 <br> F 03 D 11/00 |
| | FR - A1 - 2 398 919 (CATERPILLAR TRACTOR CO.) <br> * Fig. 1 * <br> -- | | 1 | |
| A,D | DE - A1 - 2 432 879 (ZAHNRADFABRIK FRIEDRICHSHAFEN AG) <br> * Fig. 1 * <br> -- | | | **RECHERCHIERTE SACHGEBIETE (Int. Cl.³)** <br><br> F 03 D 11/00 <br> F 16 C 35/00 <br> F 16 H 57/00 |
| A | FR - A1 - 2 381 921 (A. RATTIN) <br> * Fig. 6 * <br> ---- | | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 16-06-1981 | MASSALSKI |

EPA form 1503.1 06.78